# EUROPÄISCHE PATENTSCHRIFT

(11) **EP 2 700 135 B1**
(45) Veröffentlichungstag und Bekanntmachung des Hinweises auf die Patenterteilung: **25.10.2017**
(21) Anmeldenummer: 12717258.3
(22) Anmeldetag: 17.04.2012
(51) Int. Cl.: H02H 1/06, H02H 7/08, H01H 47/22

(54) **SCHALTUNGSANORDNUNG FÜR EIN WECHSELSTROMSCHÜTZ, MOTORSCHUTZRELAIS UND VERFAHREN ZUR HERSTELLUNG EINER SPANNUNGSVERSORGUNG**
CIRCUIT ARRANGEMENTS FOR AN ALTERNATING CURRENT CONTACTOR, MOTOR PROTECTION RELAY AND METHOD FOR PRODUCING A VOLTAGE SUPPLY
CIRCUIT ÉLECTRIQUE POUR UN CONTACTEUR À COURANT ALTERNATIF, RELAIS DE PROTECTION DE MOTEUR ET PROCÉDÉ DE FABRICATION D'UNE ALIMENTATION EN TENSION

(30) Priorität: 19.04.2011 EP 11163031
(43) Veröffentlichungstag der Anmeldung: 26.02.2014
(73) Patentinhaber: Eaton Electrical IP GmbH & Co. KG, 12529 Schönefeld (DE)
(72) Erfinder: MEID, Wolfgang, 56218 Mülheim-Kärlich (DE)
(74) Vertreter: Eaton IP Group EMEA
(86) Internationale Anmeldenummer: PCT/EP2012/057023
(87) Internationale Veröffentlichungsnummer: WO 2012/143361

(56) Entgegenhaltungen:
- EP-A1- 1 111 750
- EP-A2- 1 050 943
- US-A- 5 633 774

## Beschreibung

Die Erfindung betrifft eine Schaltungsanordnung für ein Wechselstromschütz mit einer Erregerspule, wobei die Erregerspule mindestens eine erste Wicklung zur Erzeugung einer Anzugs- und/oder Abwurferregung aufweist, ein Motorschutzrelais mit einer solchen Schaltungsanordnung, sowie ein Verfahren zur Herstellung einer Spannungsversorgung eines elektrischen Verbrauchers, wobei eine Erregerspule eines Wechselstromschützes mit mindestens einer ersten Wicklung zur Erzeugung einer Anzugs- und/oder Abwurferregung verwendet wird.

Motorschutzrelais, auch Überlastrelais genannt, stellen eine mögliche Anwendung einer Schaltungsanordnung als stromabhängige Schutzeinrichtung dar, welche eine Temperatur der Motorwicklung mittelbar über den in den Zuleitungen fließenden Strom überwachen. Ein Motorschutzrelais bietet einen bewährten und preiswerten Schutz eines Elektromotors vor Zerstörung durch Nichtanlauf, Überlastung oder Phasenausfall. Ein elektronisches Motorschutzsystem ist beispielsweise in der EP 1 050 943 A2 beschrieben. Ein Nachteil derartiger Systeme besteht darin, dass die Elektronik durch ein eigenes Netzteil, in der Regel durch einen Transformator, mit einer Betriebsspannung versorgt werden muss, was einen erheblichen Raumbedarf mit sich bringt und die Kosten für die ansonsten einfache Sicherheitseinrichtung erheblich erhöht. Im Anlagenbau wäre eine kompakte Gestaltung der Schutzeinrichtung, insbesondere als steckbares Modul wünschenswert, was mit einem separaten Transformator jedoch nur unter erheblichem konstruktivem Aufwand möglich ist.

Die US 5 633 774 beschreibt eine Schaltungsanordnung für ein Wechselstromschütz mit den Merkmale des Anspruchs 1, wobei zur Spannungversorgung der Messelektronik des Wechselstromschützes ein Transformator vorgesehen ist, dessen Wicklung magnetisch mit der Stromversorgungsleitung der ersten Wicklung gekoppelt ist. Eine Aufgabe der Erfindung besteht darin, eine Schaltungsanordnung für ein Wechselstromschütz mit einer Erregerspule derart auszubilden, dass eine kompakte

Bauform der Schaltungsanordnung bei gleichzeitiger Kostenersparnis erreicht wird.

Die Aufgabe wird durch die Gegenstände der unabhängigen Ansprüche gelöst. In den Unteransprüchen sind bevorzugte Ausführungsformen und vorteilhafte Weiterbildungen angegeben.

Die erfindungsgemäße Schaltungsanordnung für ein Wechselstromschütz weist eine Erregerspule auf, wobei die Erregerspule mindestens eine erste Wicklung zur Erzeugung einer Anzugs- und/oder Abwurferregung aufweist. Unter einem Wechselstromschütz im Sinne der Erfindung ist ein Relais zur Schaltung größerer Leistungen, beispielsweise in der Starkstromtechnik, zu verstehen, wobei der Steuerstromkreis mit Wechselspannung betrieben wird. Die Stromstärke und elektrische Spannung im Laststromkreis können um ein Vielfaches größer als in der Erregerspule sein. Schütze weisen in der Regel einen Zuganker auf, für dessen Ansteuerung eine etwas höhere Leistung erforderlich ist, als für einen Klappanker bei einem Relais. Schütze können mehrere gleichartige Schaltkontakte aufweisen, die zum Beispiel zum Schalten von Drehstromverbrauchern benötigt werden.

Erfindungsgemäß ist vorgesehen, dass die Erregerspule mindestens eine zweite Wicklung aufweist, wobei die zweite Wicklung als Spannungsversorgung für einen elektrischen Verbraucher ausgeführt ist. Ein Vorteil besteht darin, dass die Spannungsversorgung genau während der Zeit zur Verfügung steht, während der der Steuerstrom die erste Wicklung der Erregerspule durchfließt. Die erste Wicklung ist dazu insbesondere über einen Schalter mit einer Wechselstromquelle verbindbar. Die zweite Wicklung auf der Erregerspule bildet mit der ersten Wicklung auf dem gemeinsamen Spulenkern einen Transformator, so dass der Verbraucher mit einem entsprechend induzierten Wechselstrom versorgt wird. Dazu ist die erste Wicklung galvanisch von der zweiten Wicklung getrennt. Dem Fachmann sind dabei die Einflüsse von Windungszahl und Leiterquerschnitt der ersten und zweiten Wicklung auf die Parameter des induzierten Stroms bekannt. Die zweite Wicklung ist insbesondere parallel zu der ersten Wicklung angeordnet, wobei darunter eine Anordnung nebeneinander oder übereinander zu verstehen ist.

Der elektrische Verbraucher kann vorteilhaft jeder beliebige Verbraucher sein, der gerade während des aktivierten Zustands des Steuerkreises arbeiten soll. Der Verbraucher ist also bevorzugt eine elektronische Schaltung, welche eine Spannungsversorgung benötigt, während die erste Wicklung mit einer Wechselstromquelle verbunden ist. Gemäß einer bevorzugten Ausführungsform weist der elektrische Verbraucher eine elektronische Schaltung aufweist, wobei die elektronische Schaltung dazu vorgesehen ist, eine Verbindung der ersten Wicklung mit einer Wechselstromquelle zu unterbrechen. Dies erfolgt insbesondere unter zuvor definierten Umständen, die von den Eigenschaften der Elektronik abhängig sind. Denkbar ist eine Unterbrechung nach Ablauf einer bestimmten Zeit oder bei Überschreiten festgelegter Grenzwerte eines gemessenen Parameters. Durch die Unterbrechung der Verbindung der ersten Wicklung mit der Wechselstromquelle, beispielsweise durch Aktivieren eines Öffners in dem Steuerstromkreis, wird der Erregerstromkreis, oder Steuerstromkreis, getrennt und das Wechselstromschütz schaltet den Laststromkreis ab. Gleichzeitig wird die Spannungsversorgung des elektrischen Verbrauchers getrennt. Insbesondere ist der elektrische Verbraucher eine Messelektronik eines Motorschutzrelais. Mit dem üblichen Begriff Motorschutzrelais wird im Sinne der Erfindung ein entsprechendes System zum Überlastschutz eines Elektromotors verstanden, nicht das einzelne Relais oder Schütz. Sobald Parameter durch die Messelektronik erfasst werden, welche auf eine Überlast des Motors schließen lassen, kann die Messelektronik vorteilhaft unmittelbar das Wechselstromschütz abschalten, so dass der Motor getrennt wird. Die Messelektronik wird gleichzeitig abgeschaltet, da keine Spannungsversorgung mehr über die zweite Windung erfolgt, bis zu einem nachfolgenden Einschaltvorgang des Motors durch externe Betätigung.

Ein weiterer Gegenstand, der die Aufgabe löst, ist daher ein Motorschutzrelais mit einer erfindungsgemäßen Schaltungsanordnung, wie zuvor beschrieben, wobei das Wechselstromschütz zum Schalten eines Motors vorgesehen ist und wobei der elektrische Verbraucher eine Elektronik zur Überwachung des Motors ist.

Ein weiterer Gegenstand, der die Aufgabe löst, ist ein Verfahren zur Herstellung einer Spannungsversorgung eines elektrischen Verbrauchers, wobei eine Erregerspule eines Wechselstromschützes mit mindestens einer ersten Wicklung zur Erzeugung einer Anzugs- und/oder Abwurferregung verwendet wird, wobei mindestens eine zweite Wicklung auf der Erregerspule zur Spannungsversorgung des elektrischen Verbrauchers verwendet wird. Die erste Wicklung wird insbesondere über einen Schalter mit einer Wechselstromquelle verbunden. Bevorzugt wird eine Verbindung der ersten Wicklung mit der Wechselstromquelle durch den elektrischen Verbraucher getrennt, besonders bevorzugt mittels eines Öffners im Steuerstromkreis und weiterhin bevorzugt bei Erreichen festgelegter Parameter.

Nachfolgend wird die Erfindung anhand eines Ausführungsbeispiels erläutert. Die Darstellung ist lediglich beispielhaft und schränkt den allgemeinen Erfindungsgedanken nicht ein. Die Ausführungen gelten sowohl für die erfindungsgemäße Schaltungsanordnung, als auch für das erfindungsgemäße Verfahren.

Es zeigen
Figur 1 ein schematisches Schaltbild einer erfindungsgemäßen Schaltungsanordnung,
Figur 2 die Schaltungsanordnung nach Figur 1 in einer vorteilhaften Weiterbildung.

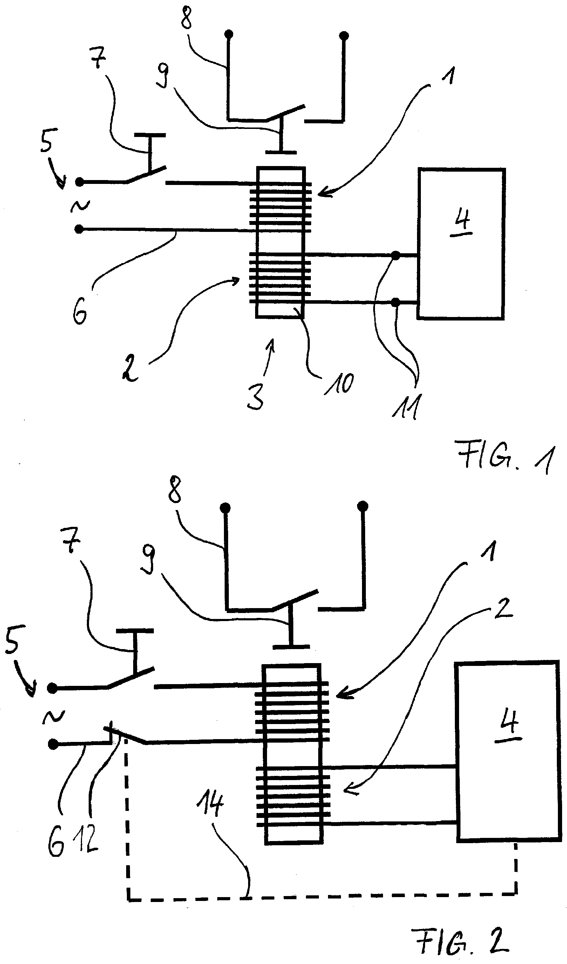

Die Figur 1 zeigt eine erfindungsgemäße Schaltungsanordnung für ein Wechselstromschütz mit einer Erregerspule 3, wobei die Erregerspule 3 mindestens eine erste Wicklung 1 zur Erzeugung einer Anzugs- und/oder Abwurferregung aufweist. Ein Steuerstromkreis 6 wird mit einer Wechselspannung 5 betrieben. Ein Laststromkreis 8 ist lediglich angedeutet dargestellt. Bei Einschalten der Wechselspannung im Steuerstromkreis 6 durch den Schalter 7 erzeugt die erste Wicklung 1 mit dem Kern 10 ein Magnetfeld, welches einen Zuganker 9 anzieht, der wiederum den Laststromkreis 8 schließt. Erfindungsgemäß ist vorgesehen, dass die Erregerspule 3 mindestens eine zweite Wicklung 2 aufweist, wobei die zweite Wicklung 2 als Spannungsversorgung für einen elektrischen Verbraucher 4 ausgeführt ist. Die Spannungsversorgung steht genau während der Zeit an den Anschlüssen 11 der zweiten Wicklung 2 zur Verfügung, während der der Steuerstrom die erste Wicklung 1 der Erregerspule 3 durchfließt. Die zweite Wicklung 2 auf der Erregerspule 3 bildet mit der ersten Wicklung 1 auf dem gemeinsamen Spulenkern 10 einen Transformator, so dass der Verbraucher 4 mit einem entsprechend induzierten Wechselstrom versorgt wird. Die erste Wicklung 1 ist erkennbar galvanisch von der zweiten Wicklung 2 getrennt.

Die Schaltungsanordnung gemäß Figur 2 unterscheidet sich von der im Zusammenhang mit der Figur 1 beschriebenen Schaltungsanordnung lediglich darin, dass der elektrische Verbraucher 4 dazu vorgesehen ist, einen Öffner 12 über eine Verbindung 14 zu betätigen. Dadurch wird die Verbindung der ersten Wicklung 1 mit der Wechselstromquelle 5 getrennt, der Steuerstromkreis 6 also unterbrochen. In der Folge öffnet der Zuganker 9, beispielsweise federbeaufschlagt, den Laststromkreis 8. Gleichzeitig wird auf die zweite Windung 2 kein Stromfluss induziert, so dass die Spannungsversorgung des elektrischen Verbrauchers 4 ebenfalls unterbrochen ist.

### Bezugszeichenliste

- 1: Erste Wicklung
- 2: Zweite Wicklung
- 3: Erregerspule
- 4: Verbraucher
- 5: Wechselstromquelle
- 6: Steuerstromkreis
- 7: Schalter
- 8: Laststromkreis
- 9: Zuganker
- 10: Spulenkern
- 11: Anschlüsse
- 12: Öffner
- 14: Verbindung

## Patentansprüche

1. Schaltungsanordnung für ein Wechselstromschütz, die Schaltungsanordnung beinhaltend eine Erregerspule (3), wobei die Erregerspule (3) mindestens eine erste Wicklung (1) zur Erzeugung einer Anzugs- und/oder Abwurferregung aufweist, **dadurch gekennzeichnet, dass** die Erregerspule (3) mindestens eine zweite Wicklung (2) aufweist, wobei die zweite Wicklung (2) als Spannungsversorgung für einen elektrischen Verbraucher (4) ausgeführt ist

2. Schaltungsanordnung nach Anspruch 1, **dadurch gekennzeichnet, dass** die erste Wicklung (1) mit einer Wechselstromquelle (5) verbindbar ist.

3. Schaltungsanordnung nach einem der vorhergehenden Ansprüche, **dadurch gekennzeichnet, dass** die erste Wicklung (1) galvanisch von der zweiten Wicklung (2) getrennt ist.

4. Schaltungsanordnung nach einem der vorhergehenden Ansprüche, **dadurch gekennzeichnet, dass** der elektrische Verbraucher (4) eine elektronische Schaltung aufweist, wobei für die elektronische Schaltung eine Spannungsversorgung vorgesehen ist, solange die erste Wicklung (1) mit einer Wechselstromquelle (5) verbunden ist.

5. Schaltungsanordnung nach einem der vorhergehenden Ansprüche, **dadurch gekennzeichnet, dass** der elektrische Verbraucher (4) eine elektronische Schaltung aufweist, wobei die elektronische Schaltung dazu vorgesehen ist, eine Verbindung der ersten Wicklung (1) mit einer Wechselstromquelle (5) zu unterbrechen.

6. Schaltungsanordnung nach einem der vorhergehenden Ansprüche, **dadurch gekennzeichnet, dass** der elektrische Verbraucher (4) eine Messelektronik eines Motorschutzrelais ist.

7. Motorschutzrelais mit einer Schaltungsanordnung nach einem der vorhergehenden Ansprüche, wobei das Wechselstromschütz zum Schalten eines Motors vorgesehen ist und wobei der elektrische Verbraucher (4) eine Elektronik zur Überwachung des Motors ist.

8. Verfahren zur Herstellung einer Spannungsversorgung eines elektrischen Verbrauchers (4), wobei eine Erregerspule (3) eines Wechselstromschützes mit mindestens einer ersten Wicklung (1) zur Erzeugung einer Anzugs- und/oder Abwurferregung verwendet wird, **dadurch gekennzeichnet, dass** mindestens eine zweite Wicklung (2) auf der Erregerspule (3) zur Spannungsversorgung des elektrischen Verbrauchers (4) verwendet wird.

9. Verfahren nach Anspruch 8, **dadurch gekennzeichnet, dass** die erste Wicklung (1) mit einer Wechselstromquelle (5) verbunden wird.

10. Verfahren nach einem der Ansprüche 8 oder 9, **dadurch gekennzeichnet, dass** eine Verbindung der ersten Wicklung (1) mit einer Wechselstromquelle (5) durch den elektrischen Verbraucher (4) getrennt wird.

## Claims

1. Circuit arrangement for an AC contactor, the circuit arrangement comprising an excitation coil (3), wherein the excitation coil (3) comprises at least one first winding (1) configured to generate a pick-up excitation and/or a discharge excitation, **characterised in that** the excitation coil (3) comprises at least one second winding (2), wherein the second winding (2) is configured as voltage supply for an electrical load (4).

2. Circuit arrangement according to claim 1, **characterised in that** the first winding (1) can be connected with an AC power source (5).

3. Circuit arrangement according to any of the preceding claims, **characterised in that** the first winding (1) is galvanically separated from the second winding (2).

4. Circuit arrangement according to any of the preceding claims, **characterised in that** the electrical load (4) comprises an electronic circuit, wherein a voltage supply is provided for the electronic circuit, as long as the first winding (1) is connected with an AC power source (5).

5. Circuit arrangement according to any of the preceding claims, **characterised in that** the electrical load (4) comprises an electronic circuit, wherein the electronic circuit is configured to interrupt a connection of the first winding (1) with an AC power source (5).

6. Circuit arrangement according to any of the preceding claims, **characterised in that** the electrical load (4) is a measurement electronic system of a motor protection relay.

7. Motor protection relay with a circuit arrangement according to any of the preceding claims, wherein the AC contactor is configured to drive a motor, and wherein the electrical load (4) is an electronic system for monitoring the motor.

8. Method for producing a voltage supply for an electrical load (4), wherein an excitation coil (3) of an AC contactor with at least one first winding (1) is used for generating a pick-up excitation and/or a discharge excitation, **characterised in that** at least one second winding (2) on the excitation coil (3) is used for supplying a voltage to the electrical load (4).

9. Method according to claim 8, **characterised in that** the first winding (1) is connected with an AC power source (5).

10. Method according to any of claims 8 or 9, **characterised in that** a connection between the first winding (1) and an AC power source (5) is separated by the electrical load (4).

## Revendications

1. Configuration de circuit pour un contacteur à courant alternatif, la configuration de circuit contenant une bobine d'excitation (3), dans laquelle la bobine d'excitation (3) présente au moins un premier enroulement (1) pour la génération d'une excitation à effet d'attraction et/ou de répulsion, **caractérisée en ce que** la bobine d'excitation (3) présente au moins un deuxième enroulement (2), dans laquelle le deuxième enroulement (2) est réalisé en tant qu'alimentation en courant pour un consommateur électrique (4).

2. Configuration de circuit selon la revendication 1, **caractérisée en ce que** le premier enroulement (1) peut être relié à une source de courant alternatif (5).

3. Configuration de circuit selon l'une des revendications précédentes, **caractérisée en ce que** le premier enroulement (1) est déconnecté de manière galvanique du deuxième enroulement (2).

4. Configuration de circuit selon l'une des revendications précédentes, **caractérisée en ce que** le consommateur électrique (4) présente un circuit électronique, dans laquelle une alimentation en courant est prévue pour le circuit électronique tant que le premier enroulement (1) est relié à une source de courant alternatif (5).

5. Configuration de circuit selon l'une des revendications précédentes, **caractérisée en ce que** le consommateur électrique (4) présente un circuit électronique, dans laquelle le circuit électronique est prévu pour interrompre une liaison du premier enroulement (1) avec une source de courant alternatif (5).

6. Configuration de circuit selon l'une des revendications précédentes, **caractérisée en ce que** le consommateur électrique (4) est un équipement électronique de mesure d'un relais de protection moteur.

7. Relais de protection moteur avec une configuration de circuit selon l'une des revendications précédentes, dans lequel le contacteur à courant alternatif est prévu pour la commutation d'un moteur et dans lequel le consommateur électrique (4) est un équipement électronique pour la surveillance du moteur.

8. Procédé de fabrication d'une alimentation en courant d'un consommateur électrique (4), dans lequel une bobine d'excitation (3) d'un contacteur à courant alternatif est utilisée avec au moins un premier enroulement (1) pour la génération d'une excitation à effet d'attraction et/ou de répulsion, **caractérisé en ce qu'**au moins un deuxième enroulement (2) est utilisé sur la bobine d'excitation (3) pour l'alimentation en courant du consommateur électrique (4).

9. Procédé selon la revendication 8, **caractérisé en ce que** le premier enroulement (1) est relié à une source de courant alternatif (5).

10. Procédé selon l'une des revendications 8 ou 9, **caractérisé en ce qu'**une liaison du premier enroulement (1) avec une source de courant alternatif (5) est déconnectée par le biais du consommateur électrique (4).
